# EUROPEAN PATENT APPLICATION

(11) **EP 4 800 219 A1**
(43) Date of publication of application: **02.09.2026**
(21) Application number: 25160331.2
(22) Date of filing: 26.02.2025
(51) Int. Cl.: F01D 5/08, F01D 5/30, F01D 5/18, F01D 11/00

(54) **SEALING STRIP FOR SEALING THE JUNCTION OF A CIRCUMFERENTIAL GROOVE OF A ROTOR AND A CIRCUMFERENTIAL ROOT OF A BLADE, TURBOMACHINE AND METHOD OF SEALING A JUNCTION OF A ROTOR AND AT LEAST ONE BLADE**

(71) Applicant: ITP Engines UK Ltd, Whetstone LE8 6LH (GB)
(72) Inventor: FRIPP, Carl, Whetstone, Leicester, LE8 6LH (GB)
(74) Representative: ABG Intellectual Property Law, S.L.

(57) **Abstract**

The invention belongs to the field of turbomachines and relates to a sealing strip (1) for sealing the junction of a circumferential groove (2.1) of a rotor (2) and a circumferential root (3.1) of a blade (3). The sealing strip comprises a main portion (1.1) having an outer surface (10) and an inner surface (11), two sealing sides (1.2, 1.3), wherein the main portion is arranged between the sealing sides, and a plurality of cooling holes (1.4) arranged along the main portion, each cooling hole extending from the outer surface to the inner surface.

The invention also relates to a turbomachine (20) comprising the roto, which includes a cooling fluid feed passage (2.2) configured to feed a cooling fluid to the circumferential groove , a plurality of blades, each blade comprising the circumferential root, wherein the circumferential roots of the blades are arranged in the circumferential groove of the rotor. The blades have at least one cooling passage (3.2) which extends from an inlet (3.2.1) arranged at the circumferential root to an outlet. The turbomachine further comprises the sealing strip arranged in a junction of the rotor and the blades, wherein at least part of the main portion of the sealing strip contacts the circumferential root of the blades and at least part of the sealing sides of the sealing strip contacts a bottom surface (2.1.1) of the circumferential groove of the rotor, wherein there is a cavity formed between said bottom surface of the circumferential groove and the inner surface of the main portion. Said cavity fluidically connects the cooling holes of the sealing strip and the cooling fluid feed passage of the rotor, wherein the inlet of at least one cooling passage of each blade is at least partially aligned with a cooling hole (1.4), thus fluidically connecting the cavity and the at least one cooling passage.

The invention also relates to a method of sealing a junction of the rotor (2) and at least one blade.

## Description

### TECHNICAL FIELD OF THE INVENTION

The present invention belongs to the field of turbomachines and, more particularly, the invention relates to the cooling of turbomachine blades.

### BACKGROUND OF THE INVENTION

During the operation of a turbomachine, such as the engine of an airplane, its internal components are exposed to high loads due to high temperature or the centrifugal forces that are generated, among others.

Operation of turbines is particularly delicate because the turbine, namely its highpressure stage, is directly confronted with hot gases coming from the combustion chamber.

One of the most critical problems turbomachine faces is how to prevent overheating of turbine components and said problem is usually addressed by cooling the turbine section using a cooling fluid drawn from the compressor section. Typically, the cooling fluid is flowed through and around various structures within the turbine section. Part of the cooling fluid is flowed through the turbine blades, which have internal passageways for the passage of cooling fluid.

Blades can be categorized according to their type of root. Blades having an axial root are usually coupled to the rotor by axially inserting the root in an appropriately shaped axial groove, wherein axial refers to a direction parallel to the rotor axis. One example of axial root is the firtree root. Blades having a circumferential root are usually coupled to the rotor by radially inserting the root in a circumferential groove of the rotor, wherein radial refers to a radial direction of the rotor. One example of circumferential root is the dovetail root. Dovetail roots are commonly used in the compressor section, whereas firtree roots are mostly used in the turbine section.

One known way to cool blades having an axial root is to supply cooling fluid from the root of the blade and pass the cooling fluid through inner passages formed in the blades. The coupling between rotor and blade is usually sealed with front and back cover plates.

Compared to blades having an axial root, blades having a circumferential root are typically more cost effective because the root profile can be produced by turning and milling. Also, broaching of the rotor groove is not required when blades having a circumferential root are used, which results in easier manufacturing, lower tooling costs and shorter delivery times. Finally, blade assembly is typically simpler with circumferential roots and can be done at any stage during the rotor assembly process, for example before final balancing. However, there is no known solution for cooling blades having circumferential roots.

### SUMMARY OF THE INVENTION

The present invention provides a solution for the aforementioned problems, by using a sealing strip for sealing the junction of a rotor and a blade according to claim 1, a turbomachine according to claim 11 and a method of sealing a junction of a rotor and at least one blade according to claim 13.

In a first inventive aspect, the invention provides a sealing strip for sealing the junction of a circumferential groove of a rotor and a circumferential root of a blade, wherein the sealing strip comprises:
- a main portion having an outer surface and an inner surface,
- two sealing sides, wherein the main portion is arranged between the sealing sides, and
- a plurality of cooling holes arranged along the main portion, each cooling hole extending from the outer surface to the inner surface.

Blades having circumferential roots are usually fitted into the circumferential groove of the rotor using a load slot. This requires a blade root that is narrower than the width of the blade. If blades are provided with at least one cooling passage extending from an inlet arranged at the circumferential root and a cooling fluid, such as air, is supplied from below the blade root, then the cooling fluid would bypass the blade root and some of the cooling fluid would go up the sides of a rotor-blade joint instead of entering the blade cooling passages, thus not cooling the blade nor the blade root. The present invention proposes a sealing strip configured to be located at the joint between rotor and blade, namely at the bottom of the circumferential groove, to prevent the cooling fluid from bypassing the blade root.

Thus, the sealing strip of the present invention prevents the cooling air coming from the rotor from escaping through the sides of the rotor-blade joint.

The sealing strip comprises a main portion and two sealing sides. The main portion of the sealing strip has an outer surface and an inner surface. The inner surface of the main portion is intended to be oriented towards a bottom surface of the circumferential groove when the sealing strip is mounted in the circumferential groove of the rotor. The outer surface of the main portion is intended to be oriented towards the blade root when the sealing strip is mounted in the circumferential groove of the rotor.

Between the bottom of the circumferential groove of the rotor and the circumferential root of each blade coupled to the rotor, a gap exists. In an operative mode, where the sealing strip is mounted in the circumferential groove of the rotor and at least one blade is coupled to the rotor, at least part of the main portion of the sealing strip contacts the circumferential root of the at least one blade and at least part of the sealing sides of the sealing strip contacts a bottom surface of the circumferential groove, thus avoiding the cooling fluid from bypassing the root of the at least one blade.

The plurality of cooling holes extending from the outer surface to the inner surface of the main portion are responsible for allowing the fluidic communication between one or more cooling fluid feed passages of the rotor and one or more cooling passages of the blades.

Advantageously, the sealing strip of the present invention avoids loss of cooling fluid, thus providing efficient cooling of blades having circumferential roots, such as dovetail roots, and allowing the use of this kind of blades both in compressor and turbine sections. As stated above, using circumferential root blades reduces rotor and blade machining costs.

The present sealing strip is easy to assemble in new compressors or turbines. In addition, this sealing strip is also easily retrofitted to existing compressors or turbines.

In an embodiment, the main portion is substantially flat.

In an embodiment, the sealing sides project with respect to the main body, such that when at least part of the sealing sides contact a bottom surface of the circumferential groove of the rotor the inner surface of the main portion is kept spaced from said bottom surface of the circumferential groove.

In other words, when the sealing strip is housed in the circumferential groove of the rotor, the inner surface oriented towards the bottom surface of the circumferential groove is spaced from said bottom surface, while at least part of the sealing sides are in contact with the bottom surface of the circumferential groove, such that a cavity is formed between the inner surface of the sealing strip and the bottom surface of the circumferential groove. This cavity and the cooling holes of the sealing strip allow the fluidic connection between the cooling fluid feed passage of the rotor and the cooling passages of the blades. Thus, this cavity is the place where the cooling fluid passes from the rotor to the blade. The sealing sides stop the cooling fluid escaping out of the cavity through any path different from the cooling holes.

The sealing strip of the present invention also allows for the cooling of the root.

In an embodiment, the sealing sides project with respect to the main body at least in a direction substantially perpendicular to the main body.

In an embodiment the sealing strip comprises at least one anti-rotation hole configured to receive an anti-rotation pin for fixing the sealing strip.

Specifically, at least one anti-rotation hole is located in the main portion of the sealing strip and extends from the outer surface to the inner surface. The anti-rotation hole is configured to host an anti-rotation pin for fixing the sealing strip in order to avoid movement of the sealing strip relative to the circumferential groove.

In an embodiment, the sealing strip comprises one single anti-rotation hole. In other embodiments, the sealing strip comprises more than one anti-rotation hole.

In an embodiment, the sealing strip is fixed to the circumferential groove using at least one screw used for fixing the blades to the rotor.

In an embodiment, the sealing sides of the sealing strip comprise a curved shape.

In an embodiment, the sealing sides form a curve from the main portion to at least one part of the sealing sides configured to contact the bottom surface of the circumferential groove.

In an embodiment each sealing side of the sealing strip is embodied as a portion extending from the main portion and bent towards the inner surface of the main portion.

In an embodiment, the sealing strip has a substantially annular shape and the outer surface of the main portion defines an outer surface of the annular shape. In particular, the sealing strip comprises a shape similar to the one of the circumferential groove of the rotor. The two ends of the sealing strip are not connected to each other, which allows an easy removal and installation of the sealing strip in the circumferential groove.

In an embodiment, the sealing strip has a substantially straight shape in a longitudinal direction, the longitudinal direction being understood as the direction in which the sealing strip extends lengthwise. In this embodiment, the sealing strip is bent into a substantially annular shape when it is fitted into the circumferential groove of the rotor, in order to adopt a curvature substantially matching the one of the circumferential groove. When the sealing strip has adopted an annular shape, the outer surface of the main portion defines an outer surface of the annular shape.

In an embodiment, the number of cooling holes is equal to or greater than the number of inlets of cooling passages of the blades intended to be coupled to the rotor. In an embodiment, the number of cooling holes is equal to the number of inlets of cooling passages of the blades intended to be coupled to the rotor.

In an embodiment the cooling holes of the sealing strip are arranged defining at least one row. That is, the plurality of cooling holes are positioned in the main portion of the sealing strip forming one or more rows in a longitudinal direction when the sealing strip has a straight shape or in a circumferential direction when the sealing strip has a substantially annular shape.

Preferably, the plurality of cooling holes are arranged forming two parallel rows.

In an embodiment, each row of cooling holes is substantially parallel to the sealing sides.

In an embodiment wherein the sealing strip has two rows of cooling holes which are parallel to the sealing sides, an anti-rotation hole is located between the two rows.

In an embodiment, the cooling holes are arranged defining at least two rows and each cooling hole of one row is aligned with a cooling hole of another row. This embodiment is advantageous in cases where the blades comprise more than one cooling passage, each cooling passage extending from an inlet arranged at the circumferential root to an outlet, because each cooling hole of the sealing strip provides a fluidic connection with a corresponding cooling passage of a blade.

In an embodiment, the anti-rotation hole is located between two rows of cooling holes.

In an embodiment, the anti-rotation hole is located equidistant from four of the cooling holes.

In an embodiment, the cooling holes are distributed along the main body in a predefined pattern.

In an embodiment, the sealing strip comprises, or is made of, at least one material selected from: Inconel alloy 625, Nimonic 75, C-263, Hastalloy x, Hayes 25, Inconel Alloy 718.

These materials support very high temperatures, so they are appropriate for a sealing strip intended for use in high temperature environments, such as aerospace or industrial environments.

In a second inventive aspect, the invention provides a turbomachine comprising:
- a rotor comprising a circumferential groove and a cooling fluid feed passage configured to feed a cooling fluid to the circumferential groove,
- a plurality of blades, each blade comprising a circumferential root, wherein the circumferential roots of the blades are arranged in the circumferential groove of the rotor, wherein the blades have at least one cooling passage which extends from an inlet arranged at the circumferential root to an outlet,

wherein the turbomachine further comprises a sealing strip according to any embodiment of the first inventive aspect, wherein the sealing strip is arranged in a junction of the rotor and the blades,
wherein at least part of the main portion of the sealing strip contacts the circumferential root of the blades and at least part of the sealing sides of the sealing strip contacts a bottom surface of the circumferential groove of the rotor,
wherein there is a cavity formed between said bottom surface of the circumferential groove and the inner surface of the main portion, said cavity fluidically connecting the cooling holes of the sealing strip and the cooling fluid feed passage of the rotor,
wherein the inlet of at least one cooling passage of each blade is at least partially aligned with a cooling hole, thus fluidically connecting the cavity and the at least one cooling passage.

A cooling hole and an inlet at least partially aligned shall be understood as at least partially overlapping. When the areas of the cooling hole and of the inlet of the cooling passage at least partially overlap fluidic communication between the cooling hole and the inlet of the cooling passage is allowed.

A turbomachine comprising the sealing strip of the present invention offers the advantage of allowing the use of circumferential root blades, which are more cost-effective and easier to manufacture than axial root blades, while providing efficient cooling of the blades, including the root. Therefore, the turbomachine of the present invention can be used in high temperature environments, such as aerospace or industrial, where cooling of the blade, including the root, is required, but where axial root blades (e.g. firtrees) cannot be incorporated into the design.

Furthermore, the turbomachine of the present invention allows a quick change out of blades, if required, since the rotor does not necessarily need to be removed to replace the blades.

In an embodiment, the alignment of a cooling hole and a corresponding inlet of a cooling passage is complete. In an embodiment, the alignment of a cooling hole and a corresponding inlet of a cooling passage is partial. When the alignment is complete, the areas of the cooling hole and the inlet completely overlap if both areas have the same size, or the smallest one of the two areas is completely contained in the largest one of the two areas when the two areas differ in size.

In an embodiment, the sealing strip comprises at least one anti-rotation hole and the turbomachine comprises an anti-rotation pin inserted in the anti-rotation hole of the sealing strip.

The anti-rotation hole and anti-rotation pin serve to avoid the movement of the sealing strip relative to the circumferential groove and to the blade roots.

In an embodiment, the rotor comprises a plurality of cooling fluid feed passages.

In an embodiment, the blades comprise a plurality of cooling passages.

In an embodiment, the number of cooling holes is equal to or greater than the number of inlets of cooling passages of the blades. In an embodiment, the number of cooling holes is equal to the number of inlets of cooling passages of the blades.

In a third inventive aspect, the invention provides a method of sealing a junction of a rotor and at least one blade, wherein the method comprises the following steps:
- providing a rotor comprising a circumferential groove and a cooling fluid feed passage configured to feed a cooling fluid to the circumferential groove,
- providing at least one blade comprising a circumferential root and at least one cooling passage which extends from an inlet arranged at the circumferential root to an outlet,
- arranging a sealing strip according to any embodiment of the first inventive aspect in the circumferential groove of the rotor, with the inner surface of the main portion of the sealing strip oriented towards a bottom surface of the circumferential groove;
- assembling the at least one blade into the circumferential groove of the rotor, this step comprising arranging the circumferential root of the at least one blade in the circumferential groove where the sealing strip is already arranged, such that the sealing strip is compressed between the bottom surface of the circumferential groove and the circumferential root of the at least one blade; wherein the circumferential root is arranged such that the inlet of at least one cooling passage of the at least one blade is at least partially aligned with a cooling hole of the sealing strip.

According to the method of the present invention, a rotor with a circumferential groove and at least one blade having a circumferential root are provided. In order to improve the cooling of the at least one blade, the at least one blade comprises at least one cooling passage which extends from an inlet arranged at the circumferential root to an outlet, while the rotor comprises a cooling fluid feed passage configured to feed a cooling fluid to the circumferential groove.

In order to avoid the loss of the cooling fluid, a sealing strip is provided between the circumferential groove of the rotor and the circumferential root of the at least one blade. This sealing strip helps to channel the cooling fluid within the blades.

The sealing strip comprises a main portion having an outer surface and an inner surface, two sealing sides, each on one side of the main portion, and a plurality of cooling holes arranged along the main portion.

The inner surface of the main portion of the sealing strip is oriented towards a bottom surface of the circumferential groove. The alignment (either partial or complete) of the inlet of at least one cooling passage of the at least one blade with a cooling hole of the sealing strip allows the entry of the cooling fluid in the at least one cooling passage, thus improving the cooling of the blades, including the roots.

In an embodiment, the method comprises providing a plurality of blades and assembling the plurality of blades into the circumferential groove of the rotor.

In an embodiment, the method further comprises fixing the sealing strip to the rotor, thus avoiding the movement of the sealing strip in the circumferential groove and the potential misalignment of the cooling holes relative to the inlets of the cooling passages.

In an embodiment, the sealing strip comprises at least one anti-rotation hole and the method comprises fixing the sealing strip to the circumferential groove by inserting an anti-rotation pin through the anti-rotation hole and fixing the anti-rotation pin.

The anti-rotation hole is configured to host an anti-rotational pin. The anti-rotational pin fixes the sealing strip to the bottom surface of the circumferential groove of the rotor to avoid the movement and misalignment of the sealing strip.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
Figures 1, 1A and 1B show a perspective view of the sealing strip according to an embodiment of the invention, a detailed view of it and an additional view of a portion of the sealing strip.
Figure 2 shows a perspective view of a rotor with the sealing strip according to an embodiment of the invention located in the circumferential groove of the rotor.
Figure 3 shows a detailed perspective cut view of the sealing strip according to an embodiment of the invention located in the circumferential groove of the rotor.
Figure 4 shows a cut view of the rotor with the sealing strip according to an embodiment of the invention and a blade mounted on it.
Figure 5 shows a perspective view of the cut view of figure 4 without the blade.
Figures 6A-6D show a cut view sequence of a method for mounting the sealing strip on the rotor according to an embodiment of the invention.

### DETAILED DESCRIPTION OF THE INVENTION

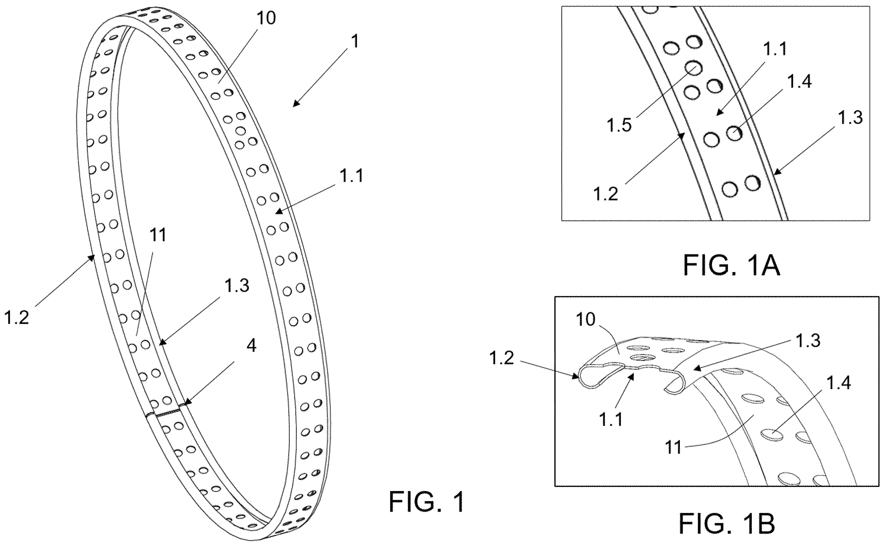

Figure 1 shows a perspective view of the sealing strip (1) according to an embodiment of the present invention. Figure 1A shows an enlarged detail of the sealing strip (1). Figure 1B shows an additional view of a portion of the sealing strip (1). As shown in Figures 1, 1A and 1B, the sealing strip (1) comprises a main portion (1.1), two sealing sides (1.2, 1.3) and a plurality of cooling holes (1.4) arranged along the main portion (1.1). The main portion (1.1) has an outer surface (10) and an inner surface (11). Specifically, the main portion (1.1) is arranged between the sealing sides (1.2, 1.3), and the plurality of cooling holes (1.4) extends from the outer surface (10) to the inner surface (11).

In the embodiment of figure 1, the sealing strip (1) has a substantially annular shape. As shown, the ends of the sealing strip (1) are not connected to each other. A sealing strip (1) having said annular shape may be formed for example by bending a substantially straight sealing strip (1) to the annular shape or by manufacturing a sealing ring and cutting the sealing ring to form an annular sealing strip (1) with disconnected ends. In Figure 1 the spacing (4) between the ends is visible. Advantageously, an annular shape wherein the ends of the sealing strip (1) are not connected to each other facilitates the placement of the sealing strip (1) in the circumferential groove (2.1) of a rotor (2).

It can be also observed in Figure 1 that in this embodiment the sealing strip (1) comprises two rows of cooling holes (1.4), wherein each row of cooling holes (1.4) is substantially parallel to the sealing sides (1.2, 1.3) and wherein each cooling hole (1.4) of one row is aligned with a cooling hole (1.4) of another row.

In this embodiment, the sealing strip (1) also comprises an anti-rotation hole (1.5). In an embodiment, the anti-rotation hole (1.5) is located equidistant from four cooling holes (1.4), as can be seen in detail in Figure 1A.

As shown in Figure 1B, in this embodiment the sealing sides (1.2, 1.3) of the sealing strip (1) comprise a curved shape. More specifically, in this embodiment each sealing side (1.2, 1.3) is embodied as a portion extending from the main portion (1.1) and bent towards the inner surface (11) of the main portion (1.1).

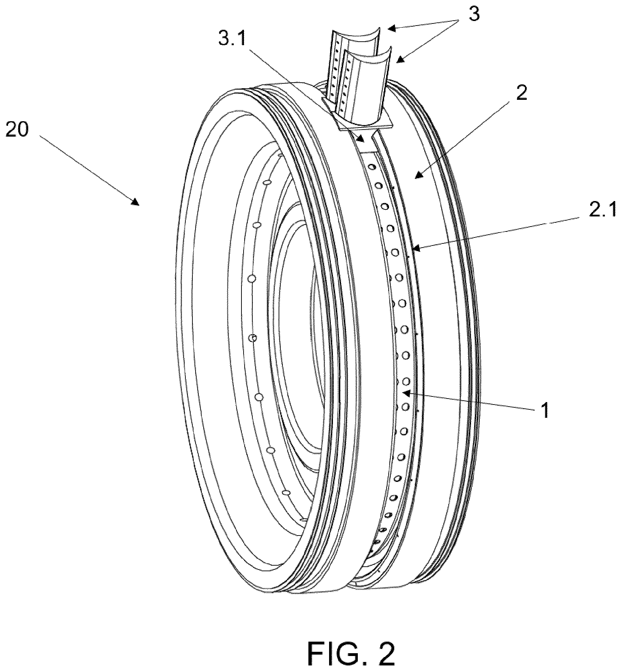

Figure 2 shows a turbomachine rotor (2) which comprises a circumferential groove (2.1) where a sealing strip (1) according to the invention is located. In Figure 2 two blades (3) are shown fixed to the rotor (2). Each blade (3) comprises a circumferential root (3.1) inserted in the circumferential groove (2.1) of the rotor (2). The sealing strip (1) is located between a bottom surface (2.1.1) of the circumferential groove (3.1) and the circumferential root (3.1) of the blades (3).

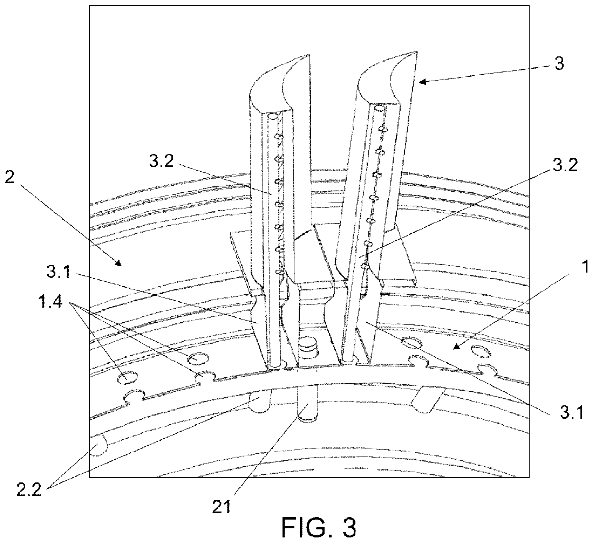

In figure 3, it is shown that the rotor (2) comprises at least one cooling fluid feed passage (2.2) configured to feed a cooling fluid to the circumferential groove (2.1). Moreover, it can be seen that the blades (3) comprise at least one cooling passage (3.2) which extends from an inlet (3.2.1) arranged at the circumferential root (3.1) to an outlet.

As shown in Figure 3, the cooling holes (1.4) of the sealing strip (1) are aligned with the inlets (3.2.1) of the cooling passages (3.2) of the blades (3). In this embodiment, the inlet of the cooling passage (3.2) has an area smaller than the area of the cooling hole (1.4) and the inlet (3.2.1) of the cooling passage (3.2) and the cooling hole (1.4) completely overlap in the whole area of the inlet (3.2.1).

In addition, figure 3 shows that the sealing strip (1) is fixed to the bottom surface of the circumferential groove (2.1) by an anti-rotational pin (21) inserted in the anti-rotational hole (1.5) of the sealing strip (1).

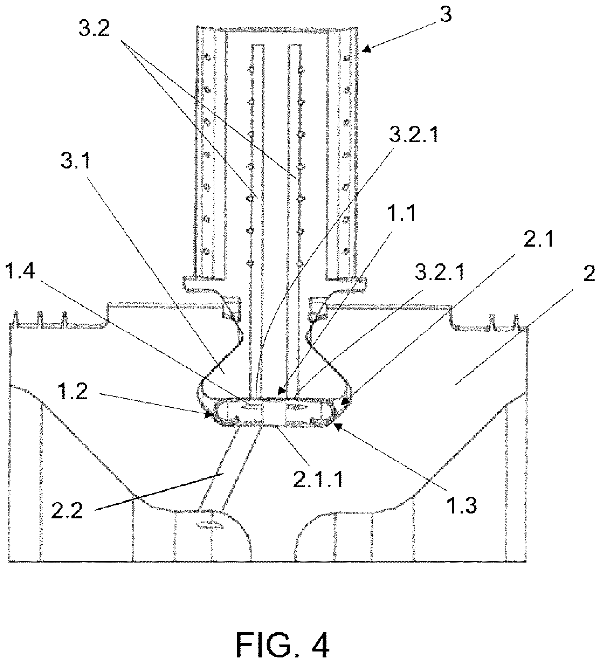

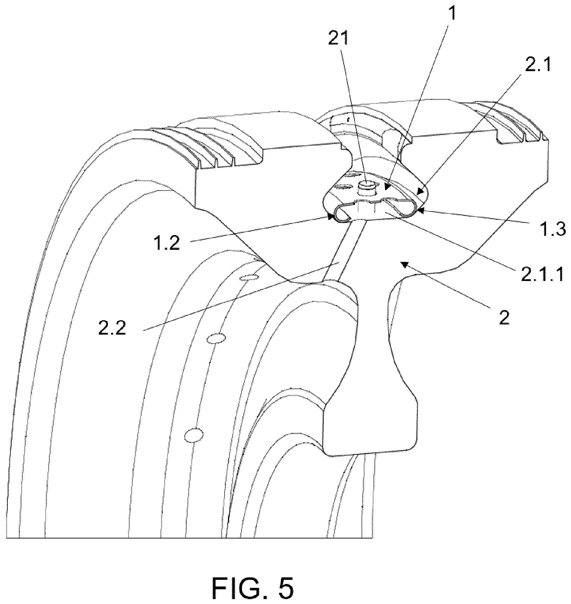

Figures 4 and 5 show a cut view, where the arrangement of the rotor (2), the sealing strip (1) and the blade (3) in a turbomachine (20) can be seen.

Specifically, the blade (3) comprises a circumferential root (3.1), which in this embodiment is a dovetail root. Cooling passages (3.2) can be seen extending from an inlet (3.2.1) located at the root (3.1) towards the outer of the blade (3). In this embodiment, each blade (3) comprises two cooling passages (3.2), but in other embodiments the blades (3) may have a different number of cooling passages (3.2). In this embodiment, a portion of the circumferential root (3.1) has the same shape as the circumferential groove (2.1) of the rotor (2) where the circumferential root (3.1) is inserted.

When the root (3.1) of the blade (3) is inserted in the circumferential groove (2.1) of the rotor (2), a gap is defined between the circumferential root (3.1) of the blade (3) and a bottom surface (2.1.1) of the circumferential groove (2.1) of the rotor (2).

In Figure 4 it is shown that the mentioned gap hosts the sealing strip (1). In this embodiment, the sealing sides (1.2, 1.3) of the sealing strip (1) extend from the main portion (1.1) and are bent towards the inner surface (11) of the main portion (1.1), as shown also in Figure 1B. The main portion (1.1) of the sealing strip (1), namely the outer surface (10), contacts the circumferential root (3.1) of the blade (3) and a portion of the sealing sides (1.2, 1.3) of the sealing strip (1) contacts the bottom surface (2.1.1) of the circumferential groove (2.1). A cavity is thus formed between said bottom surface (2.1.1) of the circumferential groove (2.1) and the inner surface (11) of the main portion (1.1), said cavity fluidically connecting the cooling holes (1.4) of the sealing strip (1) and the cooling fluid feed passage (2.2) of the rotor (2), which is also visible in Figure 4. Since the inlets (3.2.1) of the cooling passages (3.2) of the blades (3) are aligned with the cooling holes (1.4) of the sealing strip (1), the cooling passages (3.2) of the blades (3) are fluidically connected with the cooling fluid feed passage (2.2) of the rotor (2). Therefore, a cooling fluid supplied by the cooling fluid feed passage (2.2) of the rotor (2) can only flow to the cooling passages (3.2) of the blades (3), since the paths through which the cooling fluid could escape bypassing the roots are sealed by the present sealing strip (1). This avoids losing cooling fluid and improves the cooling of the blades (3).

In figure 5 it is shown how the sealing strip (1) may be fixed into the circumferential rotor groove (2.1) by inserting an anti-rotation pin (21) through the anti-rotation hole (1.5) and fixing it to the bottom surface of the circumferential groove (2.1).

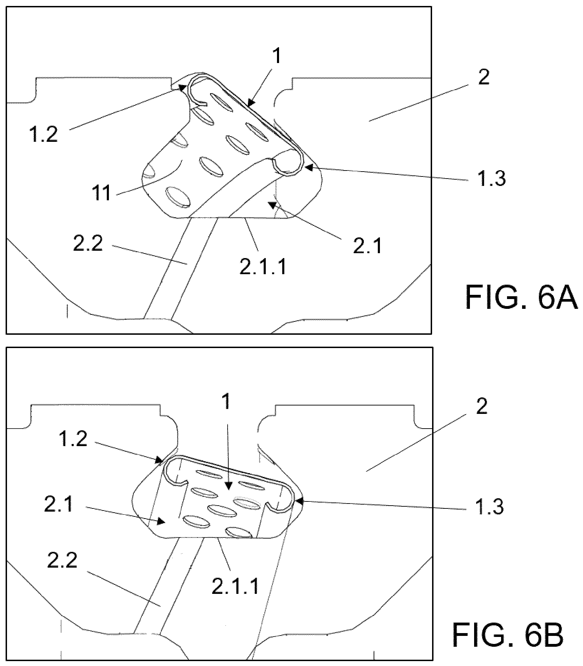

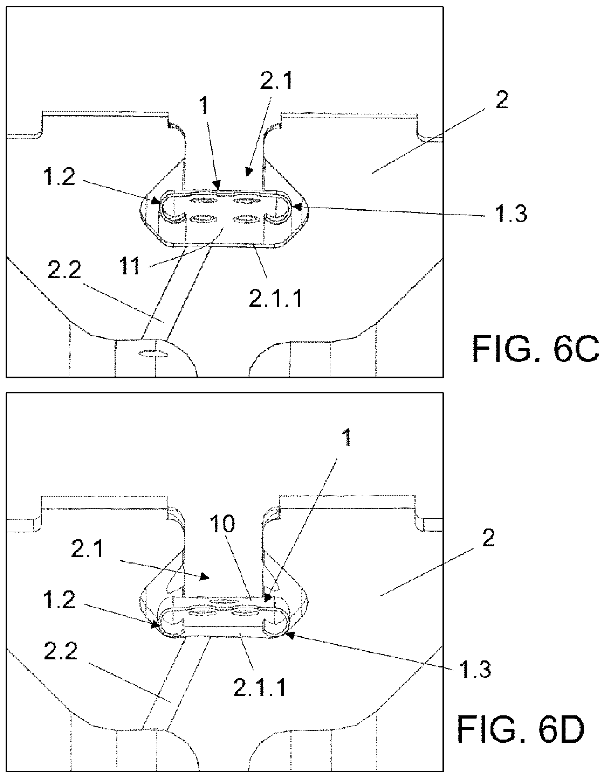

Figures 6A to 6D show a method of locating the sealing strip (1) into the circumferential groove (2.1) according to an embodiment of the invention. In the sequence of figures 6A to 6D it can be observed that the sealing strip (1) is inserted into the circumferential rotor groove (2.1) at an angle until the sealing strip (1) passes through the narrowest part of the groove (2.1). Then the sealing strip (1) can be located parallel to the bottom surface (2.1.1) of the circumferential groove (2.1), resting on said bottom surface (2.1.1), as shown in figure 6D.

In subsequent steps, the blades (3) may be coupled to the rotor (2) by inserting their roots (3.1) in the circumferential groove (2.1) of the rotor (2), arranging the blades (3) such that the inlets (3.2.1) of the cooling passages (3.2) are at least partially aligned with the cooling holes (1.4) of the sealing strip (1). Also, the sealing strip (1) may be fixed, as in figure 5, for example using an anti-rotation pin (21).

The steps of coupling the blades (3) and fixing the sealing strip (1) may be performed in different possible sequences. For example, the sealing strip (1) may be fixed firstly and the blades (3) subsequently coupled, or some of the blades (3) may be coupled before fixing the sealing strip (1) while one or more blades (3) are coupled after fixing the sealing strip (1). Also, the pressure of the blades (3) on the sealing strip (1) may be sufficient to keep the sealing strip (1) in places without any additional fixing being required.

## Claims

1. A sealing strip (1) for sealing the junction of a circumferential groove (2.1) of a rotor (2) and a circumferential root (3.1) of a blade (3), wherein the sealing strip (1) comprises:
- a main portion (1.1) having an outer surface (10) and an inner surface (11),
- two sealing sides (1.2, 1.3), wherein the main portion (1.1) is arranged between the sealing sides (1.2, 1.3), and
- a plurality of cooling holes (1.4) arranged along the main portion (1.1), each cooling hole (1.4) extending from the outer surface (10) to the inner surface (11).

2. **The** sealing strip (1) according to claim 1, wherein the sealing sides (1.2, 1.3) project with respect to the main body (1.1), such that when at least part of the sealing sides (1.2, 1.3) contacts a bottom surface (2.1.1) of the circumferential groove (2.1) of the rotor (2) the inner surface (11) of the main portion (1.1) is kept spaced from said bottom surface (2.1.1) of the circumferential groove (2.1)..

3. The sealing strip (1) according to any of the previous claims, further comprising at least one anti-rotation hole (1.5) configured to receive an anti-rotation pin for fixing the sealing strip (1).

4. The sealing strip (1) according to any of the previous claims, wherein the sealing sides (1.2, 1.3) comprise a curved shape.

5. The sealing strip (1) according to any of the previous claims, wherein each sealing side (1.2, 1.3) is embodied as a portion extending from the main portion (1.1) and bent towards the inner surface (11) of the main portion (1.1).

6. The sealing strip (1) according to any of the previous claims, wherein the cooling holes (1.4) are arranged defining at least one row.

7. The sealing strip (1) according to the previous claim, wherein each row of cooling holes (1.4) is substantially parallel to the sealing sides (1.2, 1.3).

8. The sealing strip (1) according to claim 6 or 7, wherein the cooling holes (1.4) are arranged defining a plurality of rows and wherein each cooling hole (1.4) of one row is aligned with a cooling hole (1.4) of another row.

9. The sealing strip (1) according to any of the previous claims, wherein the sealing strip (1) has a substantially annular shape and wherein the outer surface (10) of the main portion (1.1) defines an outer surface of the annular shape.

10. The sealing strip (1) according to any of the previous claims, wherein the sealing strip (1) comprises, or is made of, at least one material selected from: Inconel alloy 625, Nimonic 75, C-263, Hastalloy x, Hayes 25 and Inconel Alloy 718.

11. A turbomachine (20) comprising:
- a rotor (2) comprising a circumferential groove (2.1) and a cooling fluid feed passage (2.2) configured to feed a cooling fluid to the circumferential groove (2.1),
- a plurality of blades (3), each blade (3) comprising a circumferential root (3.1), wherein the circumferential roots (3.1) of the blades (3) are arranged in the circumferential groove (2.1) of the rotor (2), wherein the blades (3) have at least one cooling passage (3.2) which extends from an inlet (3.2.1) arranged at the circumferential root (3.1) to an outlet,
wherein the turbomachine (20) further comprises a sealing strip (1) according to any of the previous claims, the sealing strip (1) being arranged in a junction of the rotor (2) and the blades (3),
wherein at least part of the main portion (1.1) of the sealing strip (1) contacts the circumferential root (3.1) of the blades (3) and at least part of the sealing sides (1.2, 1.3) of the sealing strip (1) contacts a bottom surface (2.1.1) of the circumferential groove (2.1) of the rotor (2),
wherein there is a cavity formed between said bottom surface (2.1.1) of the circumferential groove (2.1) and the inner surface (11) of the main portion (1.1), said cavity fluidically connecting the cooling holes (1.4) of the sealing strip (1) and the cooling fluid feed passage (2.2) of the rotor (2),
wherein the inlet (3.2.1) of at least one cooling passage (3.2) of each blade (3) is at least partially aligned with a cooling hole (1.4), thus fluidically connecting the cavity and the at least one cooling passage (3.2).

12. The turbomachine (20) according to claim 11, wherein the sealing strip (1) comprises at least one anti-rotation hole (1.5) and the turbomachine (20) comprises an anti-rotation pin (21) inserted in the anti-rotation hole (1.5) of the sealing strip (1).

13. A method of sealing a junction of a rotor (2) and at least one blade (3), wherein the method comprises the following steps:
- providing a rotor (2) comprising a circumferential groove (2.1) and a cooling fluid feed passage (2.2) configured to feed a cooling fluid to the circumferential groove (2.1),
- providing at least one blade (3) comprising a circumferential root (3.1) and at least one cooling passage (3.2) which extends from an inlet (3.2.1) arranged at the circumferential root (3.1) to an outlet,
- arranging a sealing strip (1) according to any of claims 1 to 10 in the circumferential groove (2.1) of the rotor (2), with the inner surface of the main portion (1.1) of the sealing strip (1) oriented towards a bottom surface (2.1.1) of the circumferential groove (2.1);
- assembling the at least one blade (3) into the circumferential groove (2.1) of the rotor (2), this step comprising arranging the circumferential root (3.1) of the at least one blade (3) in the circumferential groove (2.1) where the sealing strip (1) is already arranged, such that the sealing strip (1) is compressed between the bottom surface (2.1.1) of the circumferential groove (2.1) and the circumferential root (3.1) of the at least one blade (3); wherein the circumferential root (3.1) is arranged such that the inlet (3.2.1) of at least one cooling passage (3.2) of the at least one blade (3) is at least partially aligned with a cooling hole (1.4) of the sealing strip (1) .

14. The method according to claim 13, further comprising fixing the sealing strip (1) to the rotor (2).

15. The method according to claim 14, wherein the sealing strip (1) comprises at least one anti-rotation hole (1.5) and wherein the method comprises fixing the sealing strip (1) to the circumferential groove (2.1) by inserting an anti-rotation pin (21) through the anti-rotation hole (1.5) and fixing the anti-rotation pin (21).
